# EUROPEAN PATENT SPECIFICATION

(11) **EP 4 311 202 B1**
(45) Date of publication and mention of the grant of the patent: **11.11.2026**
(21) Application number: 21930970.5
(22) Date of filing: 12.04.2021
(51) Int. Cl.: G06N 3/098, G06N 20/00, H04L 65/40, G06V 10/82, G06V 10/94, G06V 10/96, G06V 20/52, H04L 67/10, G06N 3/0464

(54) **END-EDGE-CLOUD COORDINATION SYSTEM AND METHOD BASED ON DIGITAL RETINA, AND DEVICE**
CLOUD-EDGE-END-KOORDINATIONSSYSTEM UND -VERFAHREN AUF BASIS EINER DIGITALEN NETZHAUT UND VORRICHTUNG
SYSTÈME ET PROCÉDÉ DE COORDINATION CÔTÉ CLIENT-PÉRIPHÉRIE-NUAGE BASÉE SUR UNE RÉTINE NUMÉRIQUE, ET DISPOSITIF

(30) Priority: 17.03.2021 CN 202110286282
(43) Date of publication of application: 24.01.2024
(73) Proprietor: Peking University, Beijing 100871 (CN)
(72) Inventor: TIAN, Yonghong, Beijing 100871 (CN); XING, Peiyin, Beijing 100871 (CN); GAO, Feng, Beijing 100871 (CN); LIU, Xiaofei, Beijing 100871 (CN); PENG, Peixi, Beijing 100871 (CN); GAO, Wen, Beijing 100871 (CN)
(74) Representative: Hoffmann Eitle
(86) International application number: PCT/CN2021/086391
(87) International publication number: WO 2022/193382

(56) References cited:
- WO-A1-2020/126168
- CN-A- 110 659 333
- CN-A- 111 090 773
- CN-A- 112 348 172
- US-A1- 2020 322 225
- XING PEIYIN ET AL: "End-Edge-Cloud Collaborative System: A Video Big Data Processing and Analysis Architecture", 2020 IEEE CONFERENCE ON MULTIMEDIA INFORMATION PROCESSING AND RETRIEVAL (MIPR), IEEE, 6 August 2020 (2020-08-06), pages 233 - 236, XP033814532, DOI: 10.1109/MIPR49039.2020.00055
- CHEN ZHUO ET AL: "Toward Intelligent Sensing: Intermediate Deep Feature Compression", IEEE TRANSACTIONS ON IMAGE PROCESSING, IEEE, USA, vol. 29, 25 September 2019 (2019-09-25), pages 2230 - 2243, XP011765070, ISSN: 1057-7149, [retrieved on 20200110], DOI: 10.1109/TIP.2019.2941660
- DUAN LINGYU ET AL: "AI-Oriented Large-Scale Video Management for Smart City: Technologies, Standards, and Beyond", IEEE MULTIMEDIA, IEEE SERVICE CENTER, NEW YORK, NY, US, vol. 26, no. 2, 25 April 2018 (2018-04-25), pages 8 - 20, XP011729826, ISSN: 1070-986X, [retrieved on 20190611], DOI: 10.1109/MMUL.2018.2873564
- IVAN V BAJI\'C ET AL: "Collaborative Intelligence: Challenges and Opportunities", ARXIV.ORG, CORNELL UNIVERSITY LIBRARY, 201 OLIN LIBRARY CORNELL UNIVERSITY ITHACA, NY 14853, 13 February 2021 (2021-02-13), XP081884614

## Description

### TECHNICAL FIELD

The present application relates to the technical field of video data processing; more specifically, the present application can provide an end-edge-cloud coordination system and method based on a digital retina, and a device.

### BACKGROUND

In a general process of traditional video data processing, compressed large-scale videos are transmitted to a cloud for storage by using the video coding technology, and each compressed video is decoded before video analysis and recognition tasks are performed. More specifically, most videos received by the cloud are used for storage; another part of the videos is used for video decoding and remote monitoring; and only a small part of the data is used for analysis and recognition tasks. Cloud storage occupies very large resources and has a high cost.

However, in recent years, the number of surveillance video data has grown exponentially. Even if a video compression rate is continuously improved, actually, there is still only a small amount of video data that can be used for the analysis and recognition tasks, resulting in low utilization rate of video big data and serious waste of video big data resources, making it difficult to exploit the value of video data.
Further, Xing Peiyin et al. disclose in Proc. IEEE Conference on Multimedia Information Processing and Retrieval, MIPR (August 6, 2020, pp. 233 to 236) an "End-Edge-Cloud Collaborative System: A Video Big Data Processing and Analysis Architecture".

### SUMMARY

In order to solve the problems of low utilization rate of video big data and serious waste of video big data in the prior art, the present application can provide an end-edge-cloud coordination system and method based on a digital retina, and a device, so as to solve one or more problems in the prior art.

In order to achieve the above technical objects, one or more embodiments of the present application discloses an end-edge-cloud coordination system based on a digital retina, in which the coordination system includes, but is not limited to, a front-end device, an edge device and a cloud device.
Specifically, the mentioned problems are solved and the mentioned technical objects are met by the subject-matter of the independent claims 1 and 5. Further preferred embodiments of the present invention are defined in the dependent claims.

The front-end device is configured to extract features with universality from collected video data and generate analysis and recognition tasks based on the features; and the front-end device is further configured to process the analysis and recognition tasks to obtain a first intermediate result to be sent to the edge device.

The edge device is configured to process the analysis and recognition tasks based on the first intermediate result to obtain a second intermediate result to be sent to the cloud device.

The cloud device is configured to process the analysis and recognition tasks based on the second intermediate result to generate an analysis and recognition result of video data.

In order to achieve the above technical objects, one or more embodiments of the present application discloses an end-edge-cloud coordination method based on a digital retina, which includes, but is not limited to, at least one of the following steps.

Extracting features with universality from collected video data.

Generating analysis and recognition tasks based on the features with universality.

Using a front-end device to process the analysis and recognition tasks to obtain a first intermediate result.

Based on the first intermediate result, using an edge device to process the analysis and recognition tasks to obtain a second intermediate result.

Based on the second intermediate result, using a cloud device to process the analysis and recognition tasks to generate an analysis and recognition result of video data.

In order to achieve the above technical objects, one or more embodiments of the present application discloses a front-end device which includes, but is not limited to, a camera, a memory and one or more processors; the camera is configured to collect video data; a computer program is stored in the memory, and when the computer program is executed by the processor, the processor executes the following steps: extracting features with universality from collected video data; generating analysis and recognition tasks based on the features with universality; and processing the analysis and recognition tasks to obtain a first intermediate result to be sent to an edge device.

The edge device is configured to process the analysis and recognition tasks based on the first intermediate result to obtain a second intermediate result to be sent to a cloud device; and the cloud device is configured to process the analysis and recognition tasks based on the second intermediate result to generate an analysis and recognition result of video data.

In order to achieve the above technical objects, one or more embodiments of the present application discloses an edge device which includes, but is not limited to, a memory and one or more processors; a computer program is stored in the memory, and when the computer program is executed by the processor, the processor executes the following steps: processing analysis and recognition tasks based on a first intermediate result to obtain a second intermediate result to be sent to a cloud device.

The first intermediate result is generated by a front-end device by processing the analysis and recognition tasks; the front-end device is configured to extract features with universality from collected video data and generate the analysis and recognition tasks based on the features with universality; and the cloud device is configured to process the analysis and recognition tasks based on the second intermediate result to generate an analysis and recognition result of video data.

In order to achieve the above technical objects, one or more embodiments of the present application discloses a cloud device which includes, but is not limited to, a memory and one or more processors; a computer program is stored in the memory, and when the computer program is executed by the processor, the processor executes the following steps: processing analysis and recognition tasks based on a second intermediate result to generate an analysis and recognition result of video data.

The second intermediate result is generated by an edge device by processing the analysis and recognition tasks; the edge device is configured to process the analysis and recognition tasks based on a first intermediate result to obtain the second intermediate result to be sent to the cloud device; the first intermediate result is generated by a front-end device by processing the analysis and recognition tasks; the front-end device is configured to extract features with universality from collected video data, and is configured to generate the analysis and recognition tasks based on the features with universality.

Further, the front-end device is configured to process the analysis and recognition tasks by using a first number of target layers in a neural network model trained by the cloud device.

Further, the edge device is configured to process the analysis and recognition tasks by using a second number of target layers in the neural network model trained by the cloud device.

Further, the cloud device is configured to process the analysis and recognition tasks by using a third number of target layers in the neural network model trained by the cloud device; in which the neural network model includes the first number of target layers, the second number of target layers and the third number of target layers connected in sequence.

Further, a plurality of the front-end devices are used for allocation and data exchange of the same level of analysis and recognition tasks therebetween.

A plurality of the edge devices are used for allocation and data exchange of the same level of analysis and recognition tasks therebetween.

A plurality of the cloud devices are used for allocation and data exchange of the same level of analysis and recognition tasks therebetween.

Further, the front-end device is a video capture device, the edge device is an edge server, and the cloud device is a cloud server.

The present application has the following advantageous effects.

The present application provides a new video data processing architecture, which can reasonably distribute computing tasks over front-end devices, edge devices and cloud devices to achieve energy efficient processing, so it can be seen that the technical solution of the present application can achieve computing coordination. The technical solution of the present application can also meet the requirements of different analysis and recognition tasks on each of the end, edge and cloud devices based on the features with universality, so it can be seen that the technical solution of the present application can achieve feature coordination. The present application can train base network models and small sample learning adaptive models or the like for different scenes on the cloud device, and perform lightweight processing for deployment to the end, edge and cloud sides, so it can be seen that the technical solution of the present application can achieve model coordination. The coordination system architecture provided by the present application can rapidly process big data, and is particularly suitable for processing large-scale video data, so as to optimize the performance of the entire video data processing system.

The technical solution of the present application breaks through the conventional video data processing architecture, can effectively and fully make use of computing resources to exploit the value of video big data, and can thoroughly solve the problem of low utilization rate of video big data from the root.

One or more technical solutions provided by the present application can be widely used in smart cities, smart transportation, bright-as-snow projects and other scenes, and have very high market value, making it suitable for large-scale promotion and application.

### BRIEF DESCRIPTION OF THE DRAWINGS

FIG. 1 shows a schematic diagram of an end-edge-cloud coordination system architecture based on a digital retina in some embodiments of the present application.
FIG. 2 shows a schematic diagram of completing classification and recognition tasks by combining the coordination system architecture of the present application with a deep neural network model in one or more embodiments of the present application.
FIG. 3 shows a schematic diagram of an end-edge-cloud coordination system architecture based on a digital retina in some other embodiments of the present application.
FIG. 4 shows a schematic diagram of coordinative computing tasks allocation among end, edge and cloud devices in one or more embodiments of the present application.
FIG. 5 shows a schematic diagram of using the cloud to train a neural network model and deploying to the application side of end and side devices in one or more embodiments of the present application.

### DETAILED DESCRIPTION

An end-edge-cloud coordination system and method based on a digital retina, and a device provided by the present application will be explained and described in detail below in combination with the accompanying drawings of the specification.

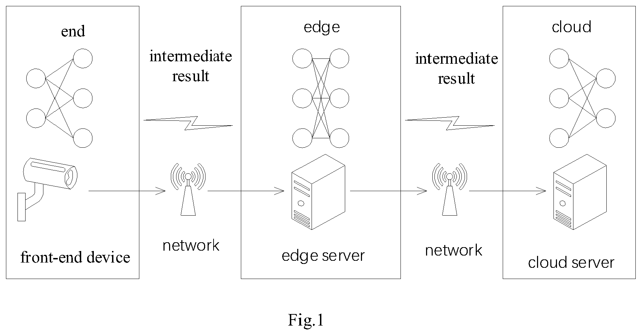

As shown in FIG. 1, the present application can provide an end-edge-cloud coordination system based on a digital retina. The coordination system includes, but is not limited to, a front-end device, an edge device and a cloud device. Computing tasks can be completed by the end (front-end device), edge (edge device) and cloud (cloud device) through labor division and cooperation. It should be understood that the solution of the present application can be used in the case of two levels of devices, such as end (front-end device) - edge (edge device), end (front-end device) - cloud (cloud device), and edge (edge device) - cloud (cloud device).

The front-end device is configured to extract features with universality from collected video data and generate relevant analysis and recognition tasks based on the features. The present application makes the extracted features have universality, so that the features in the analysis and recognition tasks have universality, and that different analysis and recognition tasks can be efficiently and rapidly processed by the front-end device, the edge device and the cloud device respectively, and can be effectively combined with convolutional neural network technology; the present application can perform online feature encoding on a multimedia stream formed by video data to obtain a feature stream. The features with universality in one or more embodiments of the present application are CDVS (Compact Descriptors for Visual Search), CDVA (Compact Descriptors for Video Analysis), VFC (vector field consensus), etc.; and for specific scenes or objects, the features may be edge features or corner features, etc. The front-end device in the embodiment of the present application is further configured to process the analysis and recognition tasks to obtain a first intermediate result that can be sent to the edge device. Therefore, it can be seen that the present application uses the front-end device to complete some computing tasks.

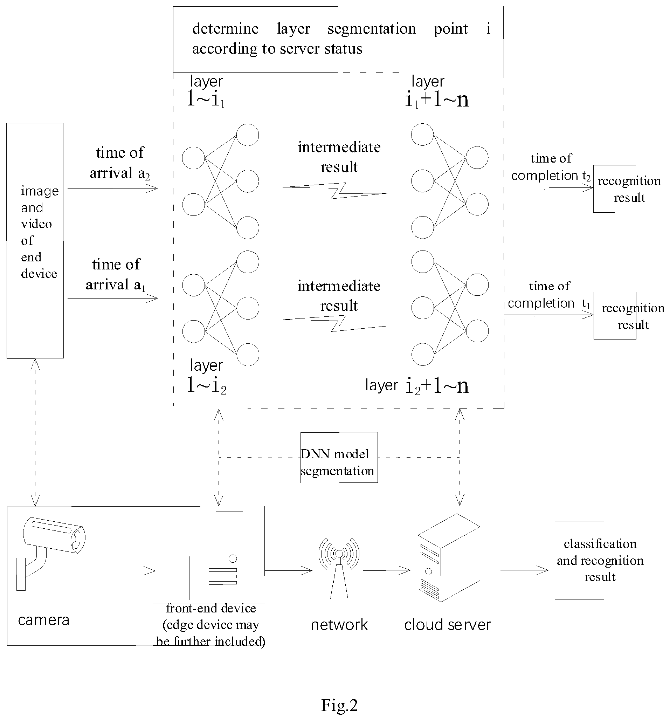

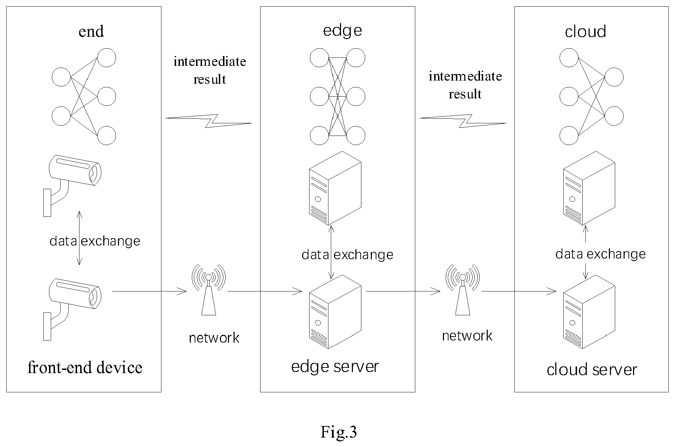

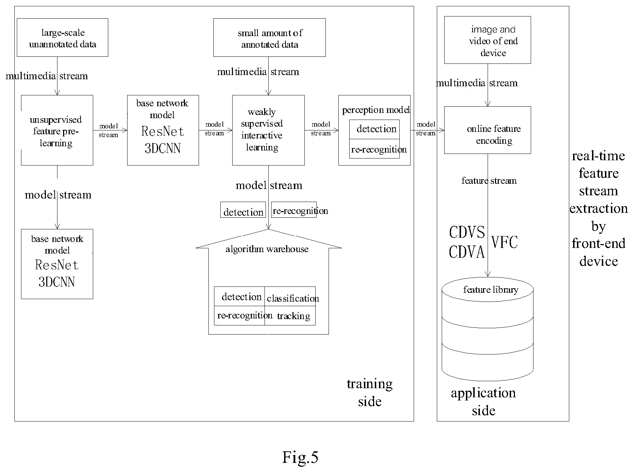

As shown in FIGS. 2 and 5, the front-end device of the present application is configured to process the analysis and recognition tasks by using a first number of target layers in a neural network model trained by the cloud device. As shown in FIG. 3, a plurality of the front-end devices can be used for allocation and data exchange of the same level of analysis and recognition tasks therebetween, and the plurality of front-end devices can cooperate to complete the computing of some analysis and recognition tasks. The front-end devices in the present application are video capture devices with a computing task processing function and a video or image capture function.

The edge device is configured to further process the analysis and recognition tasks based on the first intermediate result to obtain a second intermediate result to be sent to the cloud device. It can be seen that the present application uses the edge device to complete some computing tasks. As shown in FIGS. 2 and 5, the edge device of the present application is specifically configured to process the analysis and recognition tasks by using a second number of target layers in the neural network model trained by the cloud device. As shown in FIG. 3, a plurality of edge devices can be used for allocation and data exchange of the same level of analysis and recognition tasks therebetween, and the plurality of edge devices cooperate to complete the computing of some analysis and recognition tasks. The edge devices in the embodiment of the present application are edge servers with a computing task processing function and a storage function.

The cloud device is configured to further process the analysis and recognition tasks based on the second intermediate result to generate an analysis and recognition result of video data. It can be seen that the present application allocates computing tasks (including but not limited to analysis and recognition tasks) among the end, edge and cloud devices, which cooperate to complete all the computing tasks.

As shown in FIGS. 2 and 5, the cloud device in one or more embodiments of the present application can be specifically configured to process the analysis and recognition tasks by using a third number of target layers in the neural network model trained by the cloud device; in which the neural network model includes the first number of target layers, the second number of target layers and the third number of target layers connected in sequence directly or indirectly. Specifically, the present application can train base network models and small sample learning adaptive models or the like on the cloud, deploy the trained models to the end, edge and cloud devices, and perform lightweight processing on the models deployed to the end and edge sides. The present application can adapt the trained models to different scene platforms. In this embodiment, a deep neural network (DNN) is used as an example. In the present application, the front-end device can be used to compute part of the DNN, which is then transmitted to the edge device to compute part of the DNN, and finally, the cloud device can be used to compute the remaining DNN.

As shown in FIG. 5, the base network model of the present application may for example include, but is not limited to, ResNet (residual network), 3DCNN (3D Convolutional Neural Networks), etc. On the cloud training side, unsupervised feature pre-learning is performed on large-scale unannotated data in the form of multimedia stream, and the generated model stream is used for training the base network model. A small amount of annotated data in the form of multimedia stream is combined with the training result of the base network model for weakly supervised interactive learning, and the generated model stream is used for perception model training and algorithm warehouse verification, so that the model has the functions of target detection, target classification, target re-recognition, target tracking, etc. The trained models are allocated to the application side (including but not limited to the front-end device, the edge device, and the cloud device). On the application side, real-time feature stream extraction is performed through the front-end device. The features mentioned include but are not limited to CDVS (Compact Descriptors for Visual Search), CDVA (Compact Descriptors for Video Analysis), VFC (vector field consensus) or the like obtained through online feature encoding. A feature library is established through these features, and the features in the feature library are used in the present application to describe the analysis and recognition tasks to be processed.

As shown in FIG. 3, a plurality of the cloud devices are used for allocation and data exchange of the same level of analysis and recognition tasks therebetween, and the plurality of cloud devices cooperate to complete the computing of the remaining analysis and recognition tasks. The cloud devices are cloud servers with a computing task processing function and a big data storage function.

As shown in FIG. 2, the present application can determine one or more target layer segmentation points i (such as i₁ and i₂) according to cloud server status and/or edge server status; therefore, it can be seen that the present application can determine the number of target layers according to the edge device status and/or cloud device status. Therefore, the present application can determine at least one of the first number of target layers, the second number of target layers and the third number of target layers according to the edge device status and/or cloud device status. As to images and videos of the end device, i.e., the videos captured by the camera, they may for example include video v1 and video v2. The time when video v1 arrives at a DNN model layer 1~i₁ is a₂, an intermediate result is generated and sent to a DNN model layer i₁+1~n, the time of completion is t₂, and a corresponding recognition result (such as cat) is obtained. The DNN model layer 1~i₁ can be partially or wholly provided on the front-end device and/or edge device, and the DNN model layer i₁+1~n can be wholly or partially provided on the cloud server. The time when video v2 arrives at a DNN model layer 1~i₂ is a₁, an intermediate result is generated and sent to a DNN model layer i₂+1~n, the time of completion is t₁, and a corresponding recognition result (such as dog) is obtained. The DNN model layer 1~i₂ can be partially or wholly provided on the front-end device and/or edge device, and the DNN model layer i₂+1~n can be wholly or partially provided on the cloud server. The DNN model segmentation algorithm in the present application determines the segmentation points i₁, i₂ and the like of the model layer according to the server status, that is, if the cloud server status is idle, more model layers can be allocated; and if the cloud server currently has a large computing load or pressure, less model layers can be allocated accordingly. The present application innovatively allocates layers in the convolutional neural network such as deep neural network (DNN) to the front-end device, edge device and cloud device, which can significantly reduce the computing complexity of the cloud device, greatly reduce the load of the cloud device, and improve task processing efficiency. It is very useful for delay sensitive analysis tasks, and can be applied to a variety of video data processing scenes.

It should be understood that some front-end devices, some edge devices and some cloud devices involved in the technical solution of the present application can each choose to complete part or all of the computing of the analysis and recognition tasks, or choose not to participate in the computing. The front-end devices, edge devices and cloud devices can each have a complete communication protocol of labor division and cooperation, including data exchange communication protocols among the front-end device, the edge device and the cloud device and between devices of the same category (such as between one front-end device and another front-end device, between one edge device and another edge device, and between one cloud device and another cloud device), supporting the coordinative completion of computing tasks between devices of the same category or different categories. The front-end devices, edge devices and cloud devices can each have a complete scheduling scheme of labor division and cooperation, including computing task scheduling among the front-end devices, edge devices and cloud devices and between devices of the same category.

The digital retina involved in the present application is an end-edge-cloud coordinative processing architecture, which can be embodied in computing coordination (that is, the computing needs to be reasonably distributed on the end, edge and cloud devices to achieve high energy efficiency and other purposes), feature coordination (that is, features have universality to meet different analysis and recognition tasks on the end, edge and cloud), and model coordination (that is, base network models and small sample learning adaptive models are trained on the cloud for different scenes, and lightweight processing is performed for deployment to the end and edge sides). The present application innovatively sets a feature extraction function on the camera end (or the local server), and features can be encoded and partially processed before being transmitted to the cloud, thus forming a video big data analysis technology architecture in which features can be gathered in real time and videos can be retrieved on demand. Therefore, the present application can thoroughly solve the problems of low utilization rate of video big data, high cloud computing complexity and difficulty in real-time transmission from the root, and fully exploit the value of video big data.

Based on the same technical concept as the coordination system of the present application, one or more embodiments of the present application can provide an end-edge-cloud coordination method based on a digital retina, which can include, but is not limited to, at least one of the following steps.

Extracting features with universality from collected video data.

Generating analysis and recognition tasks (i.e., computing tasks) based on the features with universality. The present application can realize reasonable scheduling of the computing tasks.

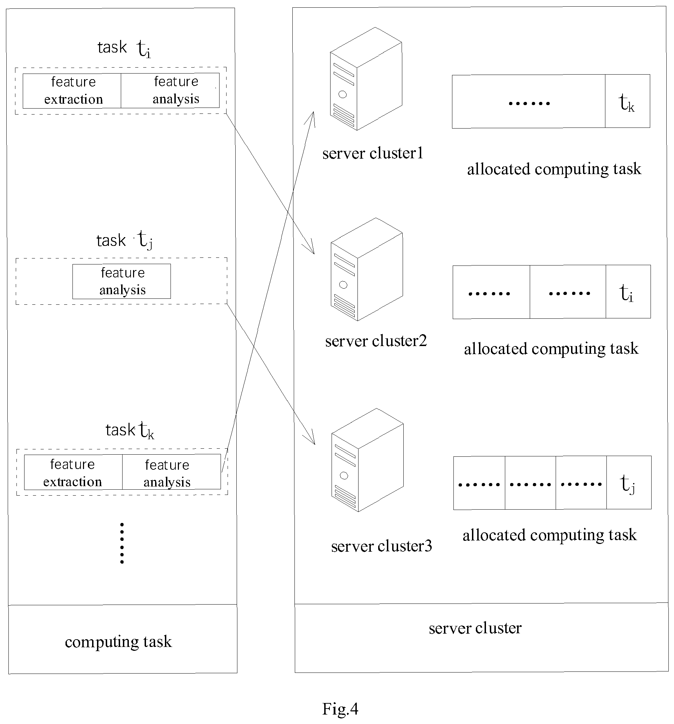

As shown in FIG. 4, the present application coordinates allocation of the computing tasks among the end, edge and cloud devices, and allocates the computing tasks to the front-end devices, edge devices and cloud devices that can each have a server cluster based on the principle of optimal performance of the entire system.

Using a front-end device to process the analysis and recognition tasks and complete the computing of some video analysis tasks to obtain a first intermediate result.

Using an edge device to receive the first intermediate result, and then using the edge device to process the analysis and recognition tasks based on the first intermediate result and complete the computing of some video analysis tasks again to obtain a second intermediate result.

Using a cloud device to receive the second intermediate result, and finally using the cloud device to process the analysis and recognition tasks based on the second intermediate result and complete the computing of the remaining video analysis tasks to generate an analysis and recognition result of video data. In addition, for the further implementation process of the end-edge-cloud coordination method, reference may be made to the description of the above end-edge-cloud coordination system, which will not be repeated herein.

Based on the same technical concept as the coordination system of the present application, one or more embodiments of the present application can provide a front-end device which includes, but is not limited to, a camera, a memory and one or more processors. The camera is configured to collect video data; a computer program is stored in the memory, and when the computer program is executed by the processor, the processor executes the following steps: extracting features with universality from collected video data; generating analysis and recognition tasks based on the features with universality; and processing the analysis and recognition tasks to obtain a first intermediate result to be sent to an edge device. The edge device is configured to process the analysis and recognition tasks based on the first intermediate result to obtain a second intermediate result to be sent to a cloud device; and the cloud device is configured to process the analysis and recognition tasks based on the second intermediate result to generate an analysis and recognition result of video data. In addition, for the relevant description of the front-end device, reference may be made to the above end-edge-cloud coordination system, which will not be repeated herein.

Based on the same technical concept as the coordination system of the present application, one or more embodiments of the present application can provide an edge device which may include, but is not limited to, a memory and one or more processors. A computer program is stored in the memory, and when the computer program is executed by the processor, the processor executes the following steps: processing analysis and recognition tasks based on a first intermediate result to obtain a second intermediate result to be sent to a cloud device.

The first intermediate result is generated by a front-end device by processing the analysis and recognition tasks; the front-end device is configured to extract features with universality from collected video data and generate the analysis and recognition tasks based on the features with universality; and the cloud device is configured to process the analysis and recognition tasks based on the second intermediate result to generate an analysis and recognition result of video data. In addition, for the relevant description of the edge device, reference may be made to the above end-edge-cloud coordination system, which will not be repeated herein.

Based on the same technical concept as the coordination system of the present application, one or more embodiments of the present application can provide a cloud device which may include, but is not limited to, a memory and one or more processors. A computer program is stored in the memory, and when the computer program is executed by the processor, the processor executes the following steps: processing analysis and recognition tasks based on a second intermediate result to generate an analysis and recognition result of video data.

The second intermediate result is generated by an edge device by processing the analysis and recognition tasks; the edge device is configured to process the analysis and recognition tasks based on a first intermediate result to obtain the second intermediate result to be sent to the cloud device; the first intermediate result is generated by a front-end device by processing the analysis and recognition tasks; and the front-end device is configured to extract features with universality from the collected video data, and is configured to generate the analysis and recognition tasks based on the features. In addition, for the relevant description of the cloud device, reference may be made to the above end-edge-cloud coordination system, which will not be repeated herein.

The logics and/or steps represented in the flowchart or described herein in other ways, for example, may be considered as an ordered list of executable instructions for implementing logical functions. The executable instructions may be embodied in any computer-readable medium so that they can be used by an instruction execution system, device, or apparatus (such as a computer-based system, a system including a processor, or other systems that can obtain instructions from the instruction execution system, device, or apparatus and execute the instructions), or can be used in connection with the instruction execution system, device, or apparatus. As far as this specification is concerned, the "computer-readable medium" may be any device that can contain, store, communicate, propagate, or transport a program for use by or in connection with an instruction execution system, device, or apparatus. More specific examples (non-exhaustive list) of the computer-readable medium include the following ones: an electrical connection part (an electronic device) with one or more wirings, a portable computer disc cartridge (a magnetic device), a random access memory (RAM), a read-only memory (ROM), an erasable programmable read-only memory (EPROM or flash memory), a fiber optic device, and a portable compact disc read-only memory (CDROM). In addition, the computer-readable medium may even be a paper or other suitable medium on which the program may be printed, since the paper or other medium may be for example optically scanned, followed by editing, interpretation or other suitable processing if necessary so as to obtain the program in an electronical manner, which is then stored in the computer memory.

It should be understood that various parts of the present application may be implemented in hardware, software, firmware, or a combination thereof. In the above embodiments, various steps or methods may be implemented by software or firmware stored in a memory and executed by a suitable instruction execution system. For example, if implemented by hardware, as in another embodiment, the steps or methods can be implemented by any one of the following techniques known in the art or a combination thereof: discrete logic circuits with logic gate circuits for implementing logic functions on data signals, application-specific integrated circuits with suitable combinational logic gate circuits, programmable gate arrays (PGA), field programmable gate arrays (FPGA), etc.

In the description of this specification, description with reference to terms "this embodiment", "an embodiment", "some embodiments", "example", "specific example" or "some examples" and the like means that specific features, structures, materials or characteristics described in connection with the embodiment or example are included in at least one embodiment or example of the present application. In this specification, schematic expressions of the above terms are not necessarily directed to the same embodiment or example. Furthermore, the specific features, structures, materials or characteristics described may be combined in any suitable manner in any one or more embodiments or examples. Furthermore, on the premise of not contradicting each other, those skilled in the art may integrate and combine different embodiments or examples described in this specification, as well as the features of the different embodiments or examples. In addition, terms "first" and "second" are only used for descriptive purposes, and should not be construed as indicating or implying relative importance or implicitly indicating the number of technical features involved. Thus, a feature delimited with "first" or "second" may explicitly or implicitly include at least one that feature. In the description of the present application, "multiple" means at least two, such as two, three, etc., unless explicitly and specifically defined otherwise.

Described above are only preferred embodiments of the present application, which are not intended to limit the present application.

## Claims

1. An end-edge-cloud coordination system based on a digital retina, wherein the end-edge-cloud coordination system comprises a front-end device, an edge device and a cloud device;
the front-end device is configured to extract features with universality from collected video data and generate analysis and recognition tasks based on the features; and the front-end device is further configured to process the analysis and recognition tasks to obtain a first intermediate result to be sent to the edge device;
the edge device is configured to process the analysis and recognition tasks based on the first intermediate result to obtain a second intermediate result to be sent to the cloud device; and
the cloud device is configured to process the analysis and recognition tasks based on the second intermediate result to generate an analysis and recognition result of video data;
the features with universality include, Compact Descriptors for Visual Search, Compact Descriptors for Video Analysis, vector field consensus, edge features or corner features;
the digital retina is a coordinative processing architecture;
the front-end device is configured to process the analysis and recognition tasks by using a first number of target layers in a neural network model trained by the cloud device;
the edge device is configured to process the analysis and recognition tasks by using a second number of target layers in the neural network model trained by the cloud device.

2. The end-edge-cloud coordination system based on the digital retina according to claim 1, wherein the cloud device is configured to process the analysis and recognition tasks by using a third number of target layers in the neural network model trained by the cloud device; and wherein the neural network model comprises the first number of target layers, the second number of target layers and the third number of target layers connected in sequence.

3. The end-edge-cloud coordination system based on the digital retina according to claim 1, wherein:
a plurality of the front-end devices are used for allocation and data exchange of the same level of analysis and recognition tasks therebetween;
a plurality of the edge devices are used for allocation and data exchange of the same level of analysis and recognition tasks therebetween; and
a plurality of the cloud devices are used for allocation and data exchange of the same level of analysis and recognition tasks therebetween.

4. The end-edge-cloud coordination system based on the digital retina according to claim 1, wherein:
the front-end device is a video capture device;
the edge device is an edge server; and
the cloud device is a cloud server.

5. An end-edge-cloud coordination method based on a digital retina, wherein the end-edge-cloud coordination method comprises the following steps:
the front-end device extracting features with universality from collected video data;
the front-end device generating analysis and recognition tasks based on the features with universality;
using a front-end device to process the analysis and recognition tasks to obtain a first intermediate result; the front-end device is configured to process the analysis and recognition tasks by using a first number of target layers in a neural network model trained by the cloud device;
based on the first intermediate result, using an edge device to process the analysis and recognition tasks to obtain a second intermediate result; the edge device is configured to process the analysis and recognition tasks by using a second number of target layers in the neural network model trained by the cloud device; and
based on the second intermediate result, using a cloud device to process the analysis and recognition tasks to generate an analysis and recognition result of video data;
the features with universality include, Compact Descriptors for Visual Search, Compact Descriptors for Video Analysis, vector field consensus, edge features or corner features;
the digital retina is a coordinative processing architecture.

## Patentansprüche

1. Cloud-Edge-End-Koordinationssystem auf Grundlage einer digitalen Netzhaut, wobei das Cloud-Edge-End-Koordinationssystem eine Front-End-Vorrichtung, eine Edge-Vorrichtung und eine Cloud-Vorrichtung umfasst;
die Front-End-Vorrichtung dazu konfiguriert ist, aus erfassten Videodaten Merkmale mit allgemeiner Verwendbarkeit zu extrahieren und auf Grundlage der Merkmale Analyse- und Erkennungsaufgaben zu erzeugen; und die Front-End-Vorrichtung ferner dazu konfiguriert ist, die Analyse- und Erkennungsaufgaben zu verarbeiten, um ein erstes Zwischenergebnis zu erhalten, das an die Edge-Vorrichtung gesendet werden soll;
die Edge-Vorrichtung dazu konfiguriert ist, die Analyse- und Erkennungsaufgaben auf Grundlage des ersten Zwischenergebnisses zu verarbeiten, um ein zweites Zwischenergebnis zu erhalten, das an die Cloud-Vorrichtung gesendet werden soll; und
die Cloud-Vorrichtung dazu konfiguriert ist, die Analyse- und Erkennungsaufgaben auf Grundlage des zweiten Zwischenergebnisses zu verarbeiten, um ein Analyse- und Erkennungsergebnis von Videodaten zu erzeugen;
die Merkmale mit allgemeiner Verwendbarkeit Compact Descriptors for Visual Search, Compact Descriptors for Video Analysis, Vector Field Consensus, Kantenmerkmale oder Eckmerkmale einschließen;
die digitale Netzhaut eine koordinative Verarbeitungsarchitektur ist;
die Front-End-Vorrichtung dazu konfiguriert ist, die Analyse- und Erkennungsaufgaben unter Verwendung von einer ersten Anzahl von Zielschichten in einem von der Cloud-Vorrichtung trainierten neuronalen Netzwerkmodell zu verarbeiten;
die Edge-Vorrichtung dazu konfiguriert ist, die Analyse- und Erkennungsaufgaben unter Verwendung von einer zweiten Anzahl von Zielschichten in dem von der Cloud-Vorrichtung trainierten neuronalen Netzwerkmodell zu verarbeiten.

2. Cloud-Edge-End-Koordinationssystem auf Grundlage der digitalen Netzhaut nach Anspruch 1, wobei die Cloud-Vorrichtung dazu konfiguriert ist, die Analyse- und Erkennungsaufgaben unter Verwendung von einer dritten Anzahl von Zielschichten in dem von der Cloud-Vorrichtung trainierten neuronalen Netzwerkmodell zu verarbeiten; und wobei das neuronale Netzwerkmodell die erste Anzahl von Zielschichten, die zweite Anzahl von Zielschichten und die dritte Anzahl von Zielschichten umfasst, die der Reihe nach verbunden sind.

3. Cloud-Edge-End-Koordinationssystem auf Grundlage der digitalen Netzhaut nach Anspruch 1, wobei:
eine Vielzahl der Front-End-Vorrichtungen zur Zuweisung und zum Datenaustausch von Analyse- und Erkennungsaufgaben derselben Ebene zwischen diesen verwendet wird;
eine Vielzahl der Edge-Vorrichtungen zur Zuweisung und zum Datenaustausch von Analyse- und Erkennungsaufgaben derselben Ebene zwischen diesen verwendet wird; und
eine Vielzahl der Cloud-Vorrichtungen zur Zuweisung und zum Datenaustausch von Analyse- und Erkennungsaufgaben derselben Ebene zwischen diesen verwendet wird.

4. Cloud-Edge-End-Koordinationssystem auf Grundlage der digitalen Netzhaut nach Anspruch 1, wobei:
die Front-End-Vorrichtung eine Videoaufnahmevorrichtung ist;
die Edge-Vorrichtung ein Edge-Server ist; und
die Cloud-Vorrichtung ein Cloud-Server ist.

5. Cloud-Edge-End-Koordinationsverfahren auf Grundlage einer digitalen Netzhaut, wobei das Cloud-Edge-End-Koordinationsverfahren die folgenden Schritte umfasst:
die Front-End-Vorrichtung extrahiert Merkmale mit allgemeiner Verwendbarkeit aus erfassten Videodaten;
die Front-End-Vorrichtung erzeugt Analyse- und Erkennungsaufgaben auf Grundlage der Merkmale mit allgemeiner Verwendbarkeit;
eine Front-End-Vorrichtung wird verwendet, um die Analyse- und Erkennungsaufgaben zu verarbeiten, um ein erstes Zwischenergebnis zu erhalten; die Front-End-Vorrichtung ist dazu konfiguriert, die Analyse- und Erkennungsaufgaben unter Verwendung einer ersten Anzahl von Zielschichten in einem von der Cloud-Vorrichtung trainierten neuronalen Netzwerkmodell zu verarbeiten;
auf Grundlage des ersten Zwischenergebnisses wird eine Edge-Vorrichtung verwendet, um die Analyse- und Erkennungsaufgaben zu verarbeiten, um ein zweites Zwischenergebnis zu erhalten; die Edge-Vorrichtung ist dazu konfiguriert, die Analyse- und Erkennungsaufgaben unter Verwendung einer zweiten Anzahl von Zielschichten in dem von der Cloud-Vorrichtung trainierten neuronalen Netzwerkmodell zu verarbeiten; und
auf Grundlage des zweiten Zwischenergebnisses wird eine Cloud-Vorrichtung verwendet, um die Analyse- und Erkennungsaufgaben zu verarbeiten, um ein Analyse- und Erkennungsergebnis von Videodaten zu erzeugen;
die Merkmale mit allgemeiner Verwendbarkeit schließen Compact Descriptors for Visual Search, Compact Descriptors for Video Analysis, Vector Field Consensus, Kantenmerkmale oder Eckmerkmale ein;
die digitale Netzhaut ist eine koordinative Verarbeitungsarchitektur.

## Revendications

1. Système de coordination côté client-périphérie-nuage basé sur une rétine numérique, dans lequel le système de coordination côté client-périphérie-nuage comprend un dispositif côté client, un dispositif en périphérie et un dispositif en nuage ;
le dispositif côté client est configuré pour extraire des caractéristiques présentant une universalité à partir de données vidéo collectées et générer des tâches d'analyse et de reconnaissance sur la base des caractéristiques ; et le dispositif côté client est en outre configuré pour traiter les tâches d'analyse et de reconnaissance afin d'obtenir un premier résultat intermédiaire devant être envoyé au dispositif en périphérie ;
le dispositif en périphérie est configuré pour traiter les tâches d'analyse et de reconnaissance sur la base du premier résultat intermédiaire afin d'obtenir un deuxième résultat intermédiaire devant être envoyé au dispositif en nuage ; et
le dispositif en nuage est configuré pour traiter les tâches d'analyse et de reconnaissance sur la base du deuxième résultat intermédiaire afin de générer un résultat d'analyse et de reconnaissance de données vidéo ;
les caractéristiques présentant une universalité incluent des Descripteurs compacts pour une recherche visuelle, des Descripteurs compacts pour une analyse vidéo, un consensus sur champ de vecteurs, des caractéristiques de périphérie ou des caractéristiques d'angle ;
la rétine numérique est une architecture de traitement en coordonnées ;
le dispositif côté client est configuré pour traiter les tâches d'analyse et de reconnaissance par l'utilisation d'un premier nombre de couches cibles dans un modèle de réseau neuronal entraîné par le dispositif en nuage ;
le dispositif en périphérie est configuré pour traiter les tâches d'analyse et de reconnaissance par l'utilisation d'un deuxième nombre de couches cibles dans le modèle de réseau neuronal entraîné par le dispositif en nuage.

2. Système de coordination côté client-périphérie-nuage basé sur la rétine numérique selon la revendication 1, dans lequel le dispositif en nuage est configuré pour traiter les tâches d'analyse et de reconnaissance par l'utilisation d'un troisième nombre de couches cibles dans le modèle de réseau neuronal entraîné par le dispositif en nuage ; et dans lequel le modèle de réseau neuronal comprend le premier nombre de couches cibles, le deuxième nombre de couches cibles et le troisième nombre de couches cibles reliées en séquence.

3. Système de coordination côté client-périphérie-nuage basé sur la rétine numérique selon la revendication 1, dans lequel :
une pluralité des dispositifs côté client sont utilisés pour l'allocation et l'échange de données des tâches d'analyse et de reconnaissance de même niveau entre eux ;
une pluralité des dispositifs en périphérie sont utilisés pour l'allocation et l'échange de données des tâches d'analyse et de reconnaissance de même niveau entre eux ; et
une pluralité des dispositifs en nuage sont utilisés pour l'allocation et l'échange de données des tâches d'analyse et de reconnaissance de même niveau entre eux.

4. Système de coordination côté client-périphérie-nuage basé sur la rétine numérique selon la revendication 1, dans lequel :
le dispositif côté client est un dispositif de capture vidéo ;
le dispositif en périphérie est un serveur en périphérie ; et
le dispositif en nuage est un serveur en nuage.

5. Procédé de coordination côté client-périphérie-nuage basé sur une rétine numérique, dans lequel le procédé de coordination côté client-périphérie-nuage comprend les étapes suivantes :
le dispositif côté client extraire des caractéristiques présentant une universalité à partir de données vidéo collectées ;
la génération par le dispositif côté client de tâches d'analyse et de reconnaissance sur la base des caractéristiques présentant une universalité ;
l'utilisation d'un dispositif côté client pour traiter les tâches d'analyse et de reconnaissance afin d'obtenir un premier résultat intermédiaire ; le dispositif côté client est configuré pour traiter les tâches d'analyse et de reconnaissance par l'utilisation d'un premier nombre de couches cibles dans un modèle de réseau neuronal entraîné par le dispositif en nuage ;
sur la base du premier résultat intermédiaire, l'utilisation d'un dispositif en périphérie pour traiter les tâches d'analyse et de reconnaissance afin d'obtenir un deuxième résultat intermédiaire ; le dispositif en périphérie est configuré pour traiter les tâches d'analyse et de reconnaissance par l'utilisation d'un deuxième nombre de couches cibles dans le modèle de réseau neuronal entraîné par le dispositif en nuage ; et
sur la base du deuxième résultat intermédiaire, l'utilisation d'un dispositif en nuage pour traiter les tâches d'analyse et de reconnaissance afin de générer un résultat d'analyse et de reconnaissance de données vidéo ;
les caractéristiques présentant une universalité incluent des Descripteurs compacts pour une recherche visuelle, des Descripteurs compacts pour une analyse vidéo, un consensus sur champ de vecteurs, des caractéristiques de périphérie ou des caractéristiques d'angle ;
la rétine numérique est une architecture de traitement en coordonnées.
